# EUROPEAN PATENT SPECIFICATION

(11) **EP 3 284 133 B1**
(45) Date of publication and mention of the grant of the patent: **03.08.2022**
(21) Application number: 16780412.9
(22) Date of filing: 22.02.2016
(51) Int. Cl.: H01M 10/36, H01M 4/64, H01M 4/02

(54) **RANDOMLY SHAPED THREE DIMENSIONAL BATTERY CELL WITH SHAPE CONFORMING CONDUCTIVE COVERING**
ZUFALLSFÖRMIGE DREIDIMENSIONALE BATTERIEZELLE MIT FORMNACHGIEBIGER LEITENDER ABDECKUNG
ÉLÉMENT DE BATTERIE TRIDIMENSIONNEL DE FORME ALÉATOIRE À REVÊTEMENT CONDUCTEUR ÉPOUSANT SA FORME

(30) Priority: 14.04.2015 US 201514686490
(43) Date of publication of application: 21.02.2018
(73) Proprietor: INTEL Corporation, Santa Clara, CA 95054 (US)
(72) Inventor: KEATES, Andrew W., Los Gatos, California 95054 (US); TIWARI, Prabhat, Gilbert, Arizona 85295 (US)
(74) Representative: HGF
(86) International application number: PCT/US2016/018976
(87) International publication number: WO 2016/167880

(56) References cited:
- EP-B1- 1 232 532
- WO-A1-01/18897
- CN-B- 103 117 406
- US-A- 5 677 080
- US-A- 5 856 040
- US-A- 5 869 205
- US-A1- 2010 119 940
- US-A1- 2011 143 202
- US-A1- 2014 011 065
- US-B1- 6 482 543

## Description

### BACKGROUND

Most battery cells come in standard cell case shapes such as cylindrical, rectangular, or coin-shaped cell cases. Ideally, a battery cell would contain mostly charge storing active materials with simple connections to these materials. However, electrons need to travel through this material, and ions typically swim through a liquid electrolyte which permeates the active materials. A long conduction path through the conductive additives in the cathode material inside the cell leads to slow delivery of current and an inability to provide substantial power from the battery cell. These slow moving electrons cause an electronic traffic jam if they arrive at an electrode faster than they are able to permeate through the active material. This electronic traffic jam limits the current that the battery is able to deliver.

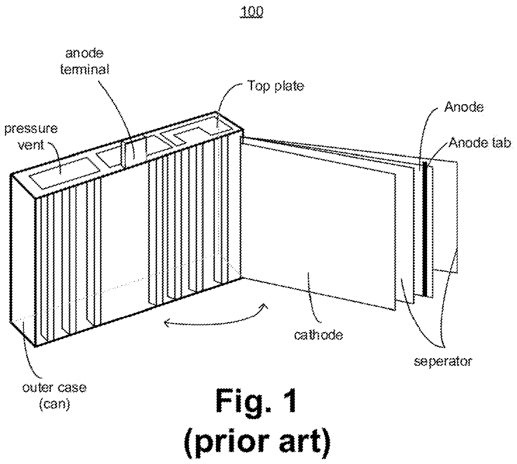

A common battery used in many devices (such as cell phones) is a Lithium- Ion (Li-ion) battery. A common form of Li-ion battery is a prismatic cell type battery 100 shown in **Fig. 1**. As with cylindrical cells (e.g., AA, AAA cells), the metal outer casing (or can) functions as a battery terminal, also known as a current collector or an anode terminal. Such battery cases are manufactured separately from the battery active layers (e.g., cathode, separator, anode, anode tab, etc.), which are constructed and then inserted into a fixed-shaped conducting metal enclosure. The fixed-shaped metal enclosure may include a top plate and a pressure vent. The fixed-shaped metal can is then welded or crimped shut after the addition of an electrolyte.

Polymer cells use a flexible 5-layer material which is heat-sealed around the edges to create an alternative package for the prismatic cell type battery 100. It may not be practical to insert a randomly-shaped cell into such a pre-formed battery case. Nor is it cost- effective to create molds or extrusion processes for a variety of oddly-shaped battery cells.

Document US2014/011065 discloses a cable-type secondary battery having a horizontal cross section of a predetermined shape and extending longitudinally, comprising: an inner electrode having an inner current collector and an inner electrode active material layer surrounding the outer surface of the inner current collector; a separation layer surrounding the outer surface of the inner electrode to prevent a short circuit between electrodes; and an outer electrode surrounding the outer surface of the separation layer, and having an outer electrode active material layer, an open-structured outer current collector and a conductive paste layer.

Document US2011/143202 discloses a monolithic three-dimensional electrochemical energy storage system provided on an aerogel or nanotube scaffold.

Document US6482543 discloses an alkaline cell having an anode comprising zinc and a cathode comprising manganese dioxide wherein the cathode is located annularly along the inside surface of the cell housing and has a plurality of indentations on the inside of its surface facing the cell interior.

Document WO 0118897 discloses a rechargeable electrochemical cell having a nickel based cathode and a zinc based anode.

Document US 2010/119940 discloses a secondary battery having a positive electrode, negative electrode, and a separator, wherein at least on of the positive electrode and the negative electrode is formed: of a charge collector having resin as a core, and a metal layer; and an electrode active material on the metal layer, the metal layer of the charge collector is formed on one surface of the resin, and the charge collector is folded at least once.

### SUMMARY

Embodiments of the invention are set out in the appended claims.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
**Fig. 1** illustrates a common form of Li-ion battery which is a prismatic cell type battery.
**Fig. 2** illustrates a toroidal cell with an outer cell-shape conforming cathode current collector, according to some embodiments of the disclosure.
**Fig. 3** illustrates a cross-section of a randomly shaped cell with an outer cathode current collector and distributed anode current collector, according to some embodiments of the disclosure.
**Fig. 4** illustrates a vertical cross-section of the randomly shaped cell of **Fig. 2** with an outer cathode current collector, according to some embodiments of the disclosure.
**Figs. 5A-C** illustrates cross-sections of portions of a randomly shaped cell at different stages of forming the randomly shaped cell, according to some embodiments.
**Fig. 6** illustrates a flowchart of a process of forming a randomly shaped cell, according to some embodiments of the disclosure.
**Fig. 7** illustrates a smart device or a computer system or a SoC (System-on-Chip) powered by a randomly shaped cell, according to some embodiments.

### DETAILED DESCRIPTION

Some embodiments describe a battery cell with an outer conductive shell that conforms to the shape of the randomly-shaped battery core (e.g., a three dimensional (3D) shaped core) of the battery cell. The term "random shape" generally refers to a three dimensional object of any shape or size designed for specific or general use. A non-traditional shape/size of a battery cell is a randomly shaped/sized battery cell. For example, a trapezoidal shaped battery cell may be a custom designed randomly shaped and sized battery cell because it may not be packaged in a standardized battery casing (e.g., AA or AAA battery casing) while a non-random battery cell is a traditional cell of standardized shape and size which inserts into a standardized battery casing (e.g., AA, AAA, C, D, etc. battery casing).

In some embodiments, electrons can travel faster (than traditional battery cells) to the nearest surface of the 3D shaped core and travel through a conductive shell to the point of connection in an electrical circuit (e.g., a circuit in a cell phone). There are several technical effects of various embodiments. For example, the charge time of the battery is greatly reduced and its power output greatly increased by such a battery cell compared to a battery with a current collector that covers only part of the outer surface. Various embodiments enable efficient packaging of battery cells in small and odd-shaped devices such as those used by the intemet-of-things (IoT). Some embodiments describe a cost-effective method for forming such randomly-shaped battery cells.

In the following description, numerous details are discussed to provide a more thorough explanation of embodiments of the present disclosure. It will be apparent, however, to one skilled in the art, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate more constituent signal paths, and/or have arrows at one or more ends, to indicate primary information flow direction. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, physical, or wireless connection between the things that are connected, without any intermediary devices. The term "coupled" means either a direct electrical, physical, or wireless connection between the things that are connected or an indirect electrical, physical, or wireless connection through one or more passive or active intermediary devices. The term "signal" means at least one current signal, voltage signal or data/clock signal. The meaning of "a," "an," and "the" include plural references. The meaning of "in" includes "in" and "on."

The terms "substantially," "close," "approximately," "near," and "about," generally refer to being within +/- 20% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

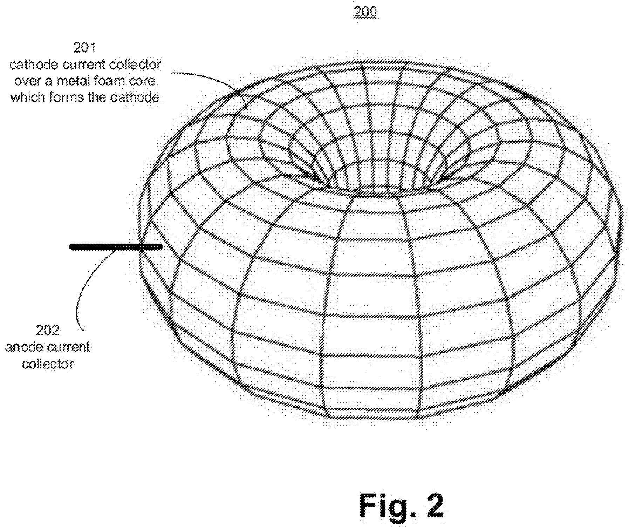

**Fig. 2** illustrates toroidal battery cell 200 with an outer cell-shape conforming cathode current collector, according to some embodiments of the disclosure. In some embodiments, toroidal battery cell 200 comprises a toroidal shaped cathode current collector 201 which covers a metal foam. In some embodiments, the metal foam has active ingredients in the pores of the foam. In some embodiments, toroidal cell 200 comprises an anode current collector 202 that couples to the anode active material embedded in the pores of toroidal shaped metal foam. The current collector 202 acts as the anode connection to the cell.

In some embodiments, the metal fibers (not shown) of toroidal shaped metal foam permeate the volume of toroidal battery cell 200. In some embodiments, the metal fibers connect to active energy-storage materials in the pores of the metal foam. Any suitable active energy-storage materials may be used for the pore of the metal foam. In some embodiments, an electrolyte is deposited in the metal foam. Any suitable electrolyte may be deposited in the metal foam.

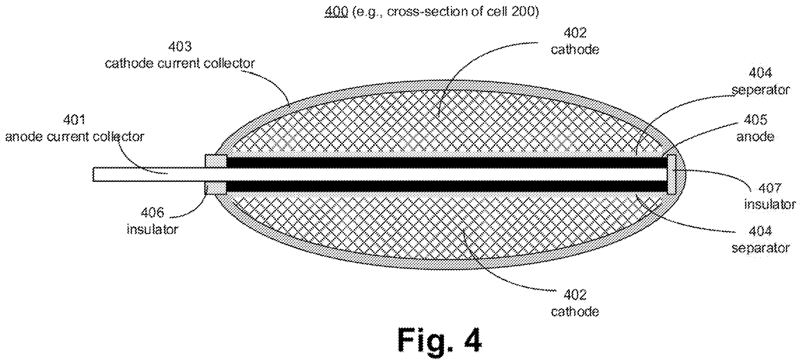

In some embodiments, toroidal battery cell 200 is made from two halves with the anode current collector as a conductive center layer like the cream cheese inside a bagel. In some embodiments, the conductive center layer is a planar layer. A cross-section of one side of such toroidal battery cell 200 is illustrated with reference to **Fig. 4**, according to some embodiments.

Referring back to **Fig. 2**, in some embodiments, toroidal battery cell 200 includes a planar or tubular central anode current collector which is coated with active anode material and surrounded by cathode material. In some embodiments, the connection to the cathode material is made through a conductive outer shell. In some embodiments, the cathode material may or may not have a metal foam embedded in it. One technical effect of such toroidal battery cell is that it improve electronic conductivity over traditional battery cells (e.g., AA, AAA cells).

In some embodiments, toroidal battery cell 200 includes a metal foam which replaces the planar or tubular central anode current collector with a distributed mesh. In some embodiments, the anode material is deposited inside the mesh instead of around a central anode current collector. Any suitable material may be used for the anode material. In one such embodiment, the cathode active material is embedded inside the pores of the mesh after the deposition of the anode layer on the fibers of the mesh. Any suitable material may be used as the cathode active material.

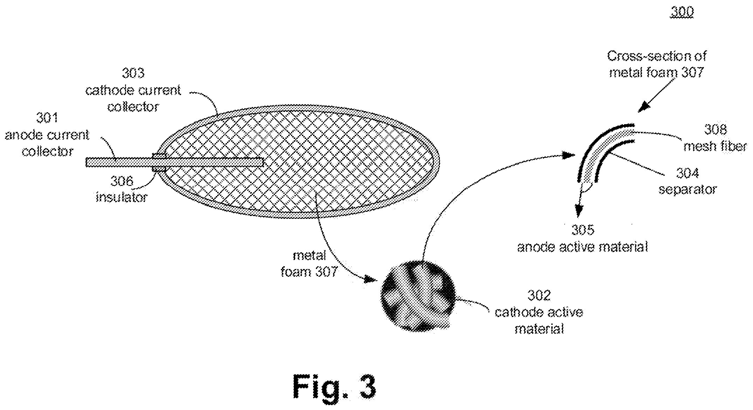

**Fig. 3** illustrates cross-section 300 of a randomly shaped cell with an outer cathode current collector, according to some embodiments of the disclosure. It is pointed out that those elements of **Fig. 3** having the same reference numbers (or names) as the elements of any other figure can operate or function in any manner similar to that described, but are not limited to such.

Cross-section 300 of the randomly shaped cell includes anode current collector 301, cathode active material 302, cathode current collector 303, separator 304, anode active material 305, insulator 306, and metal foam 307 having mesh fiber 308 (e.g., a Cu fiber), in accordance to some embodiments. In one such embodiment, metal foam 307 forms the random shape of the battery cell. In some embodiments, metal foam 307 includes anode current collector distributed throughout cathode active material 302. In some embodiments, the distributed anode current collector is then coupled to a partially penetrated anode current collector terminal 301 which forms the cell tab. In some embodiments, metal foam 307 is coated with anode active material 305 and then coated with separator 304 to encapsulate anode active material 305 (which forms the anode). The thickness of separator 304 is less than the thickness of the anode in accordance with some embodiments.

While anode current collector terminal 301 is illustrated as being substantially in the middle of the randomly shaped cell, in some embodiments, anode current collector terminal 301 may penetrate and connect to the anode material 305 (which is part of the distributed anode current collector) in the metal foam 307 away from the middle of the randomly shaped cell.

A zoomed version of metal foam 307 shows a set of intertwined fibers submerged in cathode active material 302, according to some embodiments. A cross-section of one of the fibers of metal foam 307 shows anode active material 305 covered by separators 304 and distributed throughout the cathode active material 302 in mesh fiber 307, where anode active material 305 forms the anode. In some embodiments, the distributed anode active material 305 couples to the anode current collector terminal 301 which provides the anode tab of the battery cell.

In some embodiments, separator 304 serves as an electrolyte. In some embodiments, separator 404 mechanically separates anode active material 305 (also referred to as the anode) from cathode active material 302 (also referred to as the cathode) so that they do not short out. In some embodiments, the electrolyte passes ions (not electrons) between anode 305 and cathode 302. In some embodiments, separator 304 is made of a conductive polymer or ceramic material. Other types of suitable material may also be used to form separator 304 to exhibit the functions described here.

In order to collect the electrons at the outer surfaces of the cell, in some embodiments, a shape conforming conductor is formed (i.e., cathode current collector 303) to contact the entire outer surface of metal foam 305 to couple to cathode 302. For example, cathode current collector 303 is formed by coating the randomly-shaped metal foam 307 with a conductive material. Any suitable conductive material may be used.

Applying cathode current collector 303 on the entire outside surface of metal foam 307 ensures the shortest distance for electrons to travel between inside the cathode material 302 and the surface of the cathode current collector 303. In some embodiments, the conductive layer forming cathode current collector 303 is formed by at least one of: laser ablation, chemical vapor deposition (CVD), sputtering, spraying (e.g., flame spraying), or electroplating. In some embodiments, a tab is connected to the outer shell (i.e., the layer forming cathode current collector 303). In some embodiments, the outer shell itself provides the electrical connection point as is common in traditional batteries such as AA and AAA sized batteries.

In some embodiments, insulator 306 is wrapped around anode current collector terminal 301 near the edge of the cell such that metal foam 307 and cathode current collector 303 are not shorted to anode current collector terminal 301. Any suitable material may be used to form anode current collector 301, cathode current collector 303, anode active material 305 and cathode active material 302.

**Fig. 4** illustrates a vertical cross-section 400 of the randomly shaped cell of **Fig. 2** with an outer cathode current collector, according to some embodiments of the disclosure. It is pointed out that those elements of **Fig. 4** having the same reference numbers (or names) as the elements of any other figure can operate or function in any manner similar to that described, but are not limited to such. **Fig. 3** differs from **Fig. 4** in that instead of having a central, planar, anode current collector, a metal foam acts as a distributed anode current collector, which is connected to the anode current collector terminal 301 as a battery terminal.

In some embodiments, anode current collector terminal 401 exists as a planar ring analogous to cream cheese in a bagel. In some embodiments, this planar ring is coated on both sides with active anode material 405, then a separator and finally cathode material. In some embodiments, anode active material 405 is separated from cathode current collector 403 by separator 404. In some embodiments, the thickness of separator 404 is less than the thickness of anode active material 405. While anode current collector terminal 401 is illustrated as being substantially in the middle of the randomly shaped cell, in some embodiments, anode current collector 401 may be positioned away from the middle of the randomly shaped cell.

In order to collect the electrons at the outer surfaces of the cell, in some embodiments, a conductor is constructed (i.e., cathode current collector 403) to contact the entire surface of cathode active material 402 (also referred to as the cathode). In some embodiments, cathode 402 may include a metal mesh which serves to improve conductivity through the relatively thick cathode material. In some embodiments, cathode current collector 403 is formed by coating the randomly-shaped cell (e.g., cathode foam 402) with a conductive material. Applying cathode current collector 403 on the entire outside surface of the cathode 402 ensures the shortest distance for electrons to travel between inside the cathode material and the surface of the cathode current collector 403.

In some embodiments, insulators 406/407 are wrapped around the anode current collector terminal 401 near the edges of the cell such that cathode 402 and cathode current collector 403 are not shorted to the anode current collector 401. Insulators 406/407 are non-conducting and do not allow ions or electrons to pass through.

There are several technical effects of forming cathode current collector 303/403 conforming to the random shape of the cell. For example, cathode current collector 303/403 conforming to the random shape of the cell removes the need for producing a pre-formed custom-shaped outer shell for the battery. Cathode current collector 303/403 conforming to the random shape of the cell also permits 3D shapes for battery cells that otherwise could not be inserted into a complex shaped/sized package/shell. Cathode current collector 303/403 conforming to the random shape of the cell also removes the need for welding two halves of a metal shell. Cathode current collector 303/403 conforming to the random shape of the cell further removes the need to heat-seal the edges of a polymer cell and removes the wasted area of such seams. Other technical effects will be evident by various embodiments.

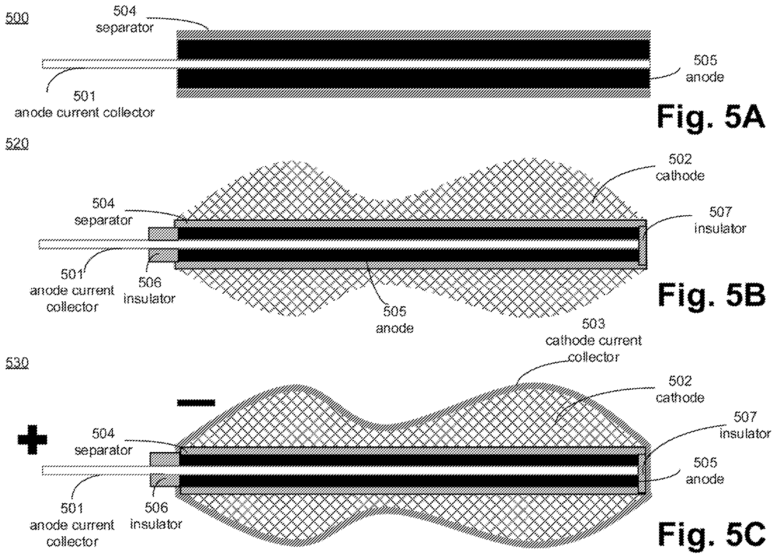

**Figs. 5A-C** illustrates cross-sections 500, 520, and 530 of portions of a randomly shaped cell at different stages of forming the randomly shaped cell, according to some embodiments of the disclosure. It is pointed out that those elements of **Figs. 5A-C** having the same reference numbers (or names) as the elements of any other figure can operate or function in any manner similar to that described, but are not limited to such.

**Fig. 5A** illustrates cross-section 500 of the anode (which forms the tubular core, for example), according to some embodiments. In some embodiments, anode current collector 501 is formed using a conductive material (e.g., Cu). In some embodiments, anode active material is deposited around anode current collector 501 to form anode 505. In some embodiments, separator 504 is deposited on anode 505. Separator 505 may serve as an electrolyte which passes ions between anode 505 and a cathode. Separator 504 separates anode 505 from the cathode which is described with reference to **Fig. 5C**.

**Fig. 5B** illustrates cross-section 520 of the cell, according to some embodiments. Cross-section 520 illustrates forming a random-shaped cathode 502 around separator 504, and then adding insulators 506 and 507 to insulate the anode current collector 501 from shorting with a cathode current collector. In some embodiments, the random-shaped cell is formed of a metal mesh which is includes metal fibers immersed in cathode active material 502. In some embodiments, insulators 506 and 507 are formed on the edges of anode 505 to isolate anode 505 from electrically shorting with cathode 502.

**Fig. 5C** illustrates cross-section 530 of the cell, according to some embodiments. In some embodiments, the conductive layer cathode current collector 403 is formed by adding a conductive material over and around cathode mesh 502. In some embodiments, the conductive material forming layer 503 is isolated from anode current collector 501 by insulators 506 and 507. In some embodiments, the conductive material forming layer 503 is formed by at least one of: laser ablation, CVD, sputtering, spraying (e.g., flame spraying), or electroplating.

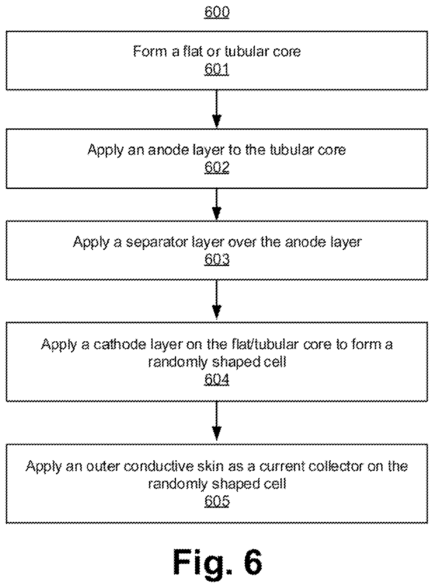

**Fig. 6** illustrates a flowchart 600 of a process of forming a randomly shaped cell, according to some embodiments of the disclosure. It is pointed out that those elements of **Fig. 6** having the same reference numbers (or names) as the elements of any other figure can operate or function in any manner similar to that described, but are not limited to such.

Although the blocks in the flowchart with reference to **Fig. 6** are shown in a particular order, the order of the actions can be modified. Thus, the illustrated embodiments can be performed in a different order, and some actions/blocks may be performed in parallel. Some of the blocks and/or operations listed in **Fig. 6** are optional in accordance with certain embodiments. The numbering of the blocks presented is for the sake of clarity and is not intended to prescribe an order of operations in which the various blocks must occur. Additionally, operations from the various flows may be utilized in a variety of combinations.

At block 601, flat or tubular core is formed. For example, anode current collector 501 is formed using a conductive material which becomes the tubular core. In some embodiments, a randomly shaped mesh is used and part of it is dedicated for anode current collector 501. At block 602, anode active material is deposited around anode current collector 501 to form anode 505. At block 603, separator 504 is deposited on anode 505. Separator 505 may serve as an electrolyte which passes ions between anode 505 and a cathode. In some embodiments, separator 504 provides an electrolyte function that passes ions between anode 505 and cathode 502. As such, the flat or tubular core is formed, according to some embodiments.

At block 604 active cathode material is added to the random-shaped mesh to form cathode 502. For example, cathode 502 is formed as a conductive foam or mesh. At block 605, an outer conductor skin is formed as a current collector conforming the random shape of the cathode 502. As such, a randomly shaped battery cell is formed with a cathode current collector formed as an outer shell of the battery cell.

In some embodiments, applying the outer conductive skin 503 over the randomly shaped cathode comprises applying at least one of: a conductive layer using laser ablation; a conductive layer using chemical vapor deposition; a conductive layer using sputtering; a conductive layer using flame spraying; or a conductive layer using electroplating.

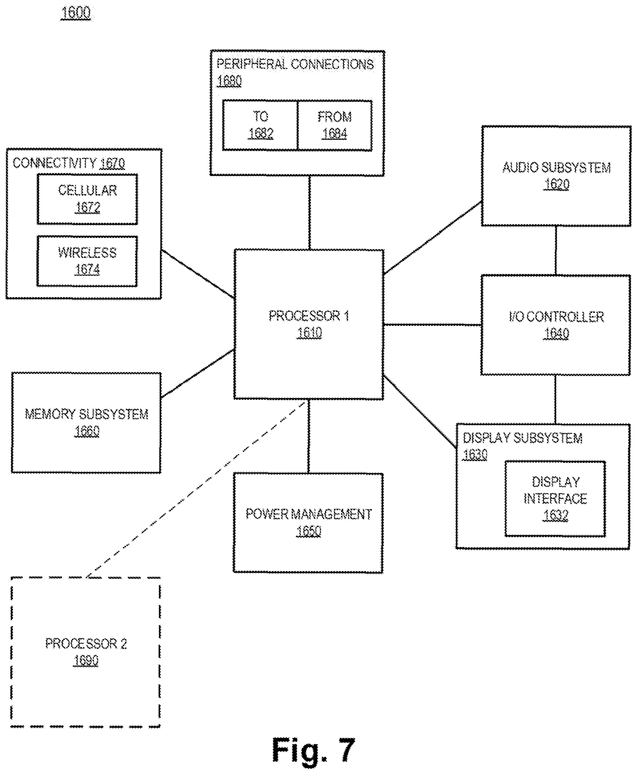

**Fig. 7** illustrates a smart device or a computer system or a SoC (System-on-Chip) powered by a randomly shaped cell, according to some embodiments. It is pointed out that those elements of **Fig. 7** having the same reference numbers (or names) as the elements of any other figure can operate or function in any manner similar to that described, but are not limited to such.

**Fig. 7** illustrates a block diagram of an embodiment of a mobile device in which flat surface interface connectors could be used. In one embodiment, computing device 1600 represents a mobile computing device, such as a computing tablet, a mobile phone or smart-phone, a wireless-enabled e-reader, or other wireless mobile device. It will be understood that certain components are shown generally, and not all components of such a device are shown in computing device 1600.

In some embodiments, computing device 1600 includes a first processor 1610 powered by a randomly shaped cell, according to some embodiments discussed. Other blocks of the computing device 1600 may also be powered by a randomly shaped cell, according to some embodiments. The various embodiments of the present disclosure may also comprise a network interface within 1670 such as a wireless interface so that a system embodiment may be incorporated into a wireless device, for example, cell phone or personal digital assistant.

In some embodiments, processor 1610 (and/or processor 1690) can include one or more physical devices, such as microprocessors, application processors, microcontrollers, programmable logic devices, or other processing means. The processing operations performed by processor 1610 include the execution of an operating platform or operating system on which applications and/or device functions are executed. The processing operations include operations related to I/O (input/output) with a human user or with other devices, operations related to power management, and/or operations related to connecting the computing device 1600 to another device. The processing operations may also include operations related to audio I/O and/or display I/O.

In some embodiments, computing device 1600 includes audio subsystem 1620, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into computing device 1600, or connected to the computing device 1600. In one embodiment, a user interacts with the computing device 1600 by providing audio commands that are received and processed by processor 1610.

In some embodiments, computing device 1600 comprises display subsystem 1630. Display subsystem 1630 represents hardware (e.g., display devices) and software (e.g., drivers) components that provide a visual and/or tactile display for a user to interact with the computing device 1600. Display subsystem 1630 includes display interface 1632, which includes the particular screen or hardware device used to provide a display to a user. In one embodiment, display interface 1632 includes logic separate from processor 1610 to perform at least some processing related to the display. In one embodiment, display subsystem 1630 includes a touch screen (or touch pad) device that provides both output and input to a user.

In some embodiments, computing device 1600 comprises I/O controller 1640. I/O controller 1640 represents hardware devices and software components related to interaction with a user. I/O controller 1640 is operable to manage hardware that is part of audio subsystem 1620 and/or display subsystem 1630. Additionally, I/O controller 1640 illustrates a connection point for additional devices that connect to computing device 1600 through which a user might interact with the system. For example, devices that can be attached to the computing device 1600 might include microphone devices, speaker or stereo systems, video systems or other display devices, keyboard or keypad devices, or other I/O devices for use with specific applications such as card readers or other devices.

As mentioned above, I/O controller 1640 can interact with audio subsystem 1620 and/or display subsystem 1630. For example, input through a microphone or other audio device can provide input or commands for one or more applications or functions of the computing device 1600. Additionally, audio output can be provided instead of, or in addition to display output. In another example, if display subsystem 1630 includes a touch screen, the display device also acts as an input device, which can be at least partially managed by I/O controller 1640. There can also be additional buttons or switches on the computing device 1600 to provide I/O functions managed by I/O controller 1640.

In some embodiments, I/O controller 1640 manages devices such as accelerometers, cameras, light sensors or other environmental sensors, or other hardware that can be included in the computing device 1600. The input can be part of direct user interaction, as well as providing environmental input to the system to influence its operations (such as filtering for noise, adjusting displays for brightness detection, applying a flash for a camera, or other features).

In some embodiments, computing device 1600 includes power management 1650 that manages battery power usage, charging of the battery, and features related to power saving operation. Memory subsystem 1660 includes memory devices for storing information in computing device 1600. Memory can include nonvolatile (state does not change if power to the memory device is interrupted) and/or volatile (state is indeterminate if power to the memory device is interrupted) memory devices. Memory subsystem 1660 can store application data, user data, music, photos, documents, or other data, as well as system data (whether long-term or temporary) related to the execution of the applications and functions of the computing device 1600. In some embodiments, power management 1650 includes apparatus and/or machine-readable medium with instructions for managing power of the randomly shaped battery.

Elements of embodiments are also provided as a machine-readable medium (e.g., memory 1660) for storing the computer-executable instructions (e.g., instructions to implement any other processes discussed herein). The machine-readable medium (e.g., memory 1660) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, computing device 1600 includes connectivity 1670. Connectivity 1670 includes hardware devices (e.g., wireless and/or wired connectors and communication hardware) and software components (e.g., drivers, protocol stacks) to enable the computing device 1600 to communicate with external devices. The computing device 1600 could be separate devices, such as other computing devices, wireless access points or base stations, as well as peripherals such as headsets, printers, or other devices.

Connectivity 1670 can include multiple different types of connectivity. To generalize, the computing device 1600 is illustrated with cellular connectivity 1672 and wireless connectivity 1674. Cellular connectivity 1672 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, or other cellular service standards. Wireless connectivity (or wireless interface) 1674 refers to wireless connectivity that is not cellular, and can include personal area networks (such as Bluetooth, Near Field, etc.), local area networks (such as Wi-Fi), and/or wide area networks (such as WiMax), or other wireless communication.

In some embodiments, computing device 1600 includes Peripheral connections 1680. Peripheral connections 1680 include hardware interfaces and connectors, as well as software components (e.g., drivers, protocol stacks) to make peripheral connections. It will be understood that the computing device 1600 could both be a peripheral device ("to" 1682) to other computing devices, as well as have peripheral devices ("from" 1684) connected to it. The computing device 1600 commonly has a "docking" connector to connect to other computing devices for purposes such as managing (e.g., downloading and/or uploading, changing, synchronizing) content on computing device 1600. Additionally, a docking connector can allow computing device 1600 to connect to certain peripherals that allow the computing device 1600 to control content output, for example, to audiovisual or other systems.

In addition to a proprietary docking connector or other proprietary connection hardware, the computing device 1600 can make peripheral connections 1680 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

The following examples pertain to further embodiments. Specifics in the examples may be used anywhere in one or more embodiments. All optional features of the apparatus described herein may also be implemented with respect to a method or process.

For example, an apparatus is provided which comprises a randomly shaped cathode; an anode current collector positioned in the randomly shaped cathode; and an outer conductor coupling the randomly shaped cathode, the outer conductor wrapping the randomly shaped cathode such that the outer conductor conforms to the shape of the randomly shaped cathode. In some embodiments, the randomly shaped cathode incorporates a metal foam. In some embodiments, the anode current collector extends along a length of the randomly shaped cathode.

In some embodiments, the anode current collector is distributed within the randomly shaped cathode. In some embodiments, the apparatus comprises an anode layer coupled to the anode current collector. In some embodiments, the anode layer wraps the anode current collector within a region of the randomly shaped cathode. In some embodiments, the apparatus comprises a separator layer separating the anode layer from the randomly shaped cathode. In some embodiments, the anode current collector extends outside of the randomly shaped cathode. In some embodiments, the outer conductor is formed by at least one of: Laser ablation; Chemical vapor deposition; Sputtering; Flame spraying; or Electroplating. In some embodiments, the anode current collector is positioned in the center of the randomly shaped cathode.

In another example, a system is provided which comprises: a memory; a processor coupled to the memory; a battery to provide power to the memory and the processor, the battery including an apparatus described above; and a wireless interface for allowing the processor to couple to another device.

In another example, a method is provided which comprises: forming a flat or tubular core to operate as an anode current collector; forming a randomly shaped cathode over the flat or tubular core; and applying an outer conductive skin over the randomly shaped cathode such that the outer conductor conforms to the shape of the randomly shaped cathode. In some embodiments, forming the flat or tubular core comprises forming an anode over an electrode used as the anode current collector. In some embodiments, forming the flat or tubular core comprises depositing an electrolyte over the anode, and wherein the electrolyte to separate the anode from the randomly shaped cathode.

In some embodiments, forming the randomly shaped cathode comprises applying a metal foam around the flat or tubular core. In some embodiments, applying the outer conductive skin over the randomly shaped cathode comprises applying at least one of: a conductive layer using laser ablation; a conductive layer using chemical vapor deposition; a conductive layer using sputtering; a conductive layer using flame spraying; or a conductive layer using electroplating.

In another example, an apparatus is provided which comprises: a randomly shaped cathode; means for anode current collection positioned in the randomly shaped cathode; and means for conductively coupling the randomly shaped cathode, wherein the means for conductively coupling to wrap the randomly shaped cathode such that the means for conductively coupling conforms to the shape of the randomly shaped cathode. In some embodiments, the randomly shaped cathode incorporates a metal foam.

In some embodiments, the means for anode current collection extends along a length of the randomly shaped cathode. In some embodiments, the means for anode current collection is distributed within the randomly shaped cathode. In some embodiments, the apparatus comprises means for wrapping the means for anode current collection within a region of the randomly shaped cathode. In some embodiments, the apparatus means for separating the means for wrapping from the randomly shaped cathode.

In some embodiments, the means for anode current collection extends outside of the randomly shaped cathode. In some embodiments, the means for conductively coupling is formed by at least one of: Laser ablation; Chemical vapor deposition; Sputtering; Flame spraying; or Electroplating. In some embodiments, the means for anode current collection is positioned in the center of the randomly shaped cathode.

In another example, a system is provided which comprises: a memory; a processor coupled to the memory; a battery to provide power to the memory and the processor, the battery including an apparatus described above; and a wireless interface for allowing the processor to couple to another device.

## Claims

1. A randomly shaped battery comprising:
a randomly shaped cathode (402);
a core, operating as an anode current collector (401) positioned in the randomly shaped cathode; and
an outer conductor (403) coupling the randomly shaped cathode, the outer conductor wrapping the randomly shaped cathode such that the outer conductor conforms to the shape of the randomly shaped cathode, wherein the randomly shaped cathode incorporates a metal foam applied around the anode current collector.

2. The randomly shaped battery of claim 1, wherein the anode current collector extends along a length of the randomly shaped cathode.

3. The randomly shaped battery of claim 1, wherein the anode current collector is distributed within the randomly shaped cathode.

4. The randomly shaped battery of claim 1 comprises an anode layer coupled to the anode current collector.

5. The randomly shaped battery of claim 4, wherein the anode layer wraps the anode current collector within a region of the randomly shaped cathode.

6. The randomly shaped battery of claim 4, comprising a separator layer separating the anode layer from the randomly shaped cathode.

7. The randomly shaped battery of claim 1, wherein the anode current collector extends outside of the randomly shaped cathode.

8. The randomly shaped battery of claim 1, wherein the outer conductor is formed by at least one of:
Laser ablation;
Chemical vapor deposition;
Sputtering;
Flame spraying; or
Electroplating.

9. A method of forming a randomly shaped battery (600) comprising:
forming a flat or tubular core (601) to operate as an anode current collector;
forming a randomly shaped cathode over the flat or tubular core; and
applying an outer conductive skin (605) over the randomly shaped cathode such that the outer conductor conforms to the shape of the randomly shaped cathode, wherein forming the randomly shaped cathode comprises applying a metal foam around the flat or tubular core.

10. The method of claim 9, wherein forming the flat or tubular core comprises forming an anode over an electrode used as the anode current collector.

11. The method of claim 10, wherein forming the flat or tubular core comprises depositing an electrolyte over the anode, and wherein the electrolyte to separate the anode from the randomly shaped cathode.

12. The method of claim 9, wherein applying the outer conductive skin over the randomly shaped cathode comprises applying at least one of:
a conductive layer using laser ablation;
a conductive layer using chemical vapor deposition;
a conductive layer using sputtering;
a conductive layer using flame spraying; or
a conductive layer using electroplating.

13. A system (1600) comprising
a memory;
a processor (1610) coupled to the memory;
a randomly shaped battery to provide power to the memory and the processor, wherein the randomly shaped battery comprises the randomly shaped battery of any one of claims 1 through 8; and
a wireless interface for allowing the processor to couple to another device.

## Patentansprüche

1. Zufallsförmige Batterie, die Folgendes umfasst:
eine zufallsförmige Kathode (402);
einen Kern, der als Anodenstromkollektor (401) in der zufallsförmigen Kathode positioniert ist; und
einen Außenleiter (403), der die zufallsförmige Kathode koppelt, wobei der Außenleiter die zufallsförmige Kathode so umhüllt, dass der Außenleiter mit der Form der zufallsförmigen Kathode übereinstimmt, wobei die zufallsförmige Kathode einen Metallschaum enthält, der um den Anodenstromkollektor herum angebracht ist.

2. Zufallsförmige Batterie nach Anspruch 1, wobei sich der Anodenstromkollektor entlang einer Länge der zufallsförmigen Kathode erstreckt.

3. Zufallsförmige Batterie nach Anspruch 1, wobei der Anodenstromkollektor in der zufallsförmigen Kathode verteilt ist.

4. Zufallsförmige Batterie nach Anspruch 1, die eine mit dem Anodenstromkollektor gekoppelte Anodenschicht umfasst.

5. Zufallsförmige Batterie nach Anspruch 4, wobei die Anodenschicht den Anodenstromkollektor innerhalb eines Bereichs der zufallsförmigen Kathode umhüllt.

6. Zufallsförmige Batterie nach Anspruch 4, die eine Separatorschicht umfasst, die die Anodenschicht von der zufallsförmigen Kathode trennt.

7. Zufallsförmige Batterie nach Anspruch 1, wobei sich der Anodenstromkollektor außerhalb der zufallsförmigen Kathode erstreckt.

8. Zufallsförmige Batterie nach Anspruch 1, wobei der Außenleiter durch mindestens eines der folgenden Verfahren gebildet wird:
Laserablation;
Chemische Gasphasenabscheidung;
Sputtern;
Flammspritzen; oder
Galvanisieren.

9. Verfahren zur Formung einer zufallsförmigen Batterie (600), das Folgendes umfasst:
Formen eines flachen oder röhrenförmigen Kerns (601), der als Anodenstromkollektor dient;
Formen einer zufallsförmigen Kathode über dem flachen oder röhrenförmigen Kern; und
Aufbringen einer äußeren leitenden Haut (605) über der zufallsförmigen Kathode, so dass der Außenleiter mit der Form der zufallsförmigen Kathode übereinstimmt, wobei das Formen der zufallsförmigen Kathode das Aufbringen eines Metallschaums um den flachen oder röhrenförmigen Kern umfasst.

10. Verfahren nach Anspruch 9, wobei das Formen des flachen oder röhrenförmigen Kerns das Formen einer Anode über einer als Anodenstromkollektor verwendeten Elektrode umfasst.

11. Verfahren nach Anspruch 10, wobei das Formen des flachen oder röhrenförmigen Kerns das Abscheiden eines Elektrolyten über der Anode umfasst, und wobei der Elektrolyt so konfiguriert ist, dass er die Anode von der zufallsförmigen Kathode trennt.

12. Verfahren nach Anspruch 9, wobei das Aufbringen der äußeren leitenden Haut über der zufallsförmigen Kathode das Aufbringen von mindestens einem der folgenden Elemente umfasst:
eine leitende Schicht durch Laserablation;
eine leitende Schicht durch chemische Gasphasenabscheidung;
eine leitende Schicht durch Sputtern;
eine leitende Schicht durch Flammspritzen; oder
eine leitende Schicht durch Galvanisieren.

13. System (1600), das Folgendes umfasst:
einen Speicher;
einen Prozessor (1610), der mit dem Speicher gekoppelt ist;
eine zufallsförmige Batterie, um den Speicher und den Prozessor mit Energie zu versorgen, wobei die zufallsförmige Batterie die zufallsförmige Batterie nach einem der Ansprüche 1 bis 8 umfasst; und
eine drahtlose Schnittstelle, über die der Prozessor mit einer anderen Vorrichtung verbunden werden kann.

## Revendications

1. Batterie de forme aléatoire comprenant :
une cathode de forme aléatoire (402) ;
un noyau, fonctionnant comme un collecteur de courant d'anode (401) positionné dans la cathode de forme aléatoire ; et
un conducteur extérieur (403) couplant la cathode de forme aléatoire, le conducteur extérieur enveloppant la cathode de forme aléatoire de sorte que le conducteur extérieur se conforme à la forme de la cathode de forme aléatoire, où la cathode de forme aléatoire incorpore une mousse métallique appliquée autour du collecteur de courant d'anode.

2. Batterie de forme aléatoire selon la revendication 1, dans laquelle le collecteur de courant anodique s'étend sur une longueur de la cathode de forme aléatoire.

3. Batterie de forme aléatoire selon la revendication 1, dans laquelle le collecteur de courant anodique est distribué à l'intérieur de la cathode de forme aléatoire.

4. Batterie de forme aléatoire selon la revendication 1 comprenant une couche d'anode couplée au collecteur de courant anodique.

5. Batterie de forme aléatoire selon la revendication 4, dans laquelle la couche d'anode enveloppe le collecteur de courant anodique dans une région de la cathode de forme aléatoire.

6. Batterie de forme aléatoire selon la revendication 4, comprenant une couche séparatrice séparant la couche anodique de la cathode de forme aléatoire.

7. Batterie de forme aléatoire selon la revendication 1, dans laquelle le collecteur de courant anodique s'étend à l'extérieur de la cathode de forme aléatoire.

8. Batterie de forme aléatoire selon la revendication 1, dans laquelle le conducteur externe est formé par au moins l'un des moyens suivants :
ablation au laser ;
dépôt chimique en phase vapeur ;
pulvérisation ;
pulvérisation à la flamme ; ou
galvanoplastie.

9. Procédé de formation d'une batterie de forme aléatoire (600) comprenant :
la formation d'un noyau plat ou tubulaire (601) pour fonctionner comme collecteur de courant anodique ;
la formation d'une cathode de forme aléatoire sur le noyau plat ou tubulaire ; et
l'application d'une peau conductrice externe (605) sur la cathode de forme aléatoire de telle sorte que le conducteur externe se conforme à la forme de la cathode de forme aléatoire, où la formation de la cathode de forme aléatoire comprend l'application d'une mousse métallique autour du noyau plat ou tubulaire.

10. Procédé selon la revendication 9, dans lequel la formation du noyau plat ou tubulaire comprend la formation d'une anode sur une électrode utilisée comme collecteur de courant anodique.

11. Procédé selon la revendication 10, dans lequel la formation du noyau plat ou tubulaire comprend le dépôt d'un électrolyte sur l'anode, et où l'électrolyte est destiné à séparer l'anode de la cathode de forme aléatoire.

12. Procédé selon la revendication 9, dans lequel l'application de la peau conductrice externe sur la cathode de forme aléatoire comprend l'application d'au moins un des éléments suivants :
une couche conductrice au moyen d'une ablation au laser ;
une couche conductrice au moyen d'un dépôt chimique en phase vapeur ;
une couche conductrice au moyen d'une pulvérisation cathodique ;
une couche conductrice au moyen d'une pulvérisation à la flamme ; ou
une couche conductrice au moyen d'une galvanoplastie.

13. Système (1600) comprenant :
une mémoire ;
un processeur (1610) couplé à la mémoire ;
une batterie de forme aléatoire pour alimenter la mémoire et le processeur, où la batterie de forme aléatoire comprend la batterie de forme aléatoire de l'une quelconque des revendications 1 à 8 ; et
une interface sans fil pour permettre au processeur de se coupler à un autre dispositif.
